Europäisches Patentamt

European Patent Office

Office européen des brevets

(11) Veröffentlichungsnummer: **0 218 091**
**B1**

(12) **EUROPÄISCHE PATENTSCHRIFT**

(45) Veröffentlichungstag der Patentschrift:
27.12.89

(51) Int. Cl.⁴: **F16D 23/14**

(21) Anmeldenummer: **86112096.2**

(22) Anmeldetag: **02.09.86**

(54) **Schiebehülse aus polymerem Werkstoff für Kupplungsausrücklager.**

(30) Priorität: **03.10.85 DE 3535263**

(43) Veröffentlichungstag der Anmeldung:
**15.04.87 Patentblatt 87/16**

(45) Bekanntmachung des Hinweises auf die Patenterteilung:
**27.12.89 Patentblatt 89/52**

(84) Benannte Vertragsstaaten:
**DE FR GB IT**

(56) Entgegenhaltungen:
**DE-A- 3 151 473**
**FR-A- 2 001 617**
**FR-A- 2 503 297**
**FR-A- 2 512 142**
**FR-A- 2 544 038**

(73) Patentinhaber: **INA Wälzlager Schaeffler KG,
Industriestrasse 1-3 Postfach 1220,
D-8522 Herzogenaurach(DE)**

(72) Erfinder: **Parzefall, Walter, Kettelerstrasse 1,
D-8521 Bubenreuth(DE)**

(74) Vertreter: **Klug, Horst, Dipl.-Ing. (FH), c/o INA Wälzlager
Schaeffler KG Postfach 12 20,
D-8522 Herzogenaurach(DE)**

ACTORUM AG

**Beschreibung**

Die Erfindung betrifft eine Schiebehülse aus polymerem Werkstoff für Kupplungsausrücklager, bestehend aus einem hohlzylindrischen Nabenkörper, der an seiner Mantelfläche einen radial nach außen gerichteten Ringbund aufweist, an dessen der Kupplung zugewandten Stirnfläche ein im wesentlichen kreisringförmiger Metallflansch anliegt, der eine Anlagefläche für einen radial verschiebbaren Laufring eines Wälzlagers bildet und einen axial gerichteten Kragen aufweist. Eine solche Schiebehülse ist aus der DE-A 3 151 473 bekannt.

Bei derartigen Schiebehülsen aus polymerem Werkstoff besteht die Gefahr, daß sich der Ringbund infolge von Materialanhäufungen und/oderAusnehmungen beim Abkühlen in unkontrollierbarer Weise verziehen kann, so daß die Anlagefläche für den im wesentlichen kreisringförmigen Metallflansch nicht mehr eben ist. Wenn dieser nur gegen den Ringbund angelegt ist, kann dies dazu führen, daß er unter Belastung gegenüber der Schiebehülse Relativ- und Kippbewegungen ausführt, die einen vorzeitigen Verschleiß am Nabenkörper und damit den Ausfall des Kupplungsausrücklagers zur Folge haben.

Der Erfindung liegt die Aufgabe zugrunde, eine Schiebehülse der genannten Art in einfacher Weise so auszubilden, daß auch bei eventuellen Verzug des Ringbundes vorzeitige Verschleißerscheinungen vermieden werden.

Erfindungsgemäß wird diese Aufgabe dadurch gelöst, daß der Kragen sich wenigstens über einen Teil der inneren und/oder äußeren Umfangsfläche des Metallflansches 4 erstreckt und sich mit radialer Vorspannung auf einer Mantelfläche des Nabenkörpers und/oder des Ringbundes abstützt. Durch die vorgeschlagene Maßnahme ergibt sich der Vorteil, daß der im wesentlichen kreisringförmige Metallflansch trotz unebener Anlagefläche am Ringbund einwandfrei auf der Mantelfläche des Nabenkörpers und/oder des Ringbundes geführt ist und keinerlei Kippbewegungen ausführen kann.

Es ist weiterhin eine Schiebehülse für Kupplungsausrücklager bekannt, bei der der in den Nabenkörper eingreifende Abschnitt des Druckringes im Bereich der Bohrung mindestens zwei radial nach innen gerichtete Lappen aufweist, deren freie Abschnitte in axialer Richtung abgewinkelt sind. Bei dieser Schiebehülse ist der Druckring jedoch in den Nabenkörper eingegossen, wobei die abgewinkelten Abschnitt im wesentlichen zur Verdrehsicherung dienen (DE-U 81 37 226).

In weiterer Ausgestaltung der Erfindung ist vorgesehen, daß im Bereich des axial gerichteten Kragens wenigstens eine radial durchgehende Ausnehmung vorhanden ist, die mit einem entsprechenden Vorsprung des Nabenkörpers oder des Ringbundes formschlüssig zusammenwirkt. Auf diese Weise wird mit einfachen Mitteln eine Sicherung geschaffen, die ein Verdrehen des Metallflansches gegenüber dem Nabenkörper verhindert.

Ausführungsbeispiele der Erfindung sind in der Zeichnung dargestellt und werdn nachfolgend näher beschrieben.

Es zeigen

Fig. 1 eine erfindungsgemäße Schiebehülse im Längsschnitt,
Fig. 2 einen Schnitt nach der Linie II-II in Figur 1,
Fig. 3 eine andere Ausführungsform der Schiebehülse im Längsschnitt und
Fig. 4 einen Schnitt nach der Linie IV-IV in Figur 3.

Die Schiebehülse aus polymeren Werkstoff besteht aus einem hohlzylindrischen Nabenkörper 1, der an seiner Mantelfläche 2 einen radial nach außen gerichteten Ringbund 3 aufweist, an dessen der Kupplung zuge wandten Stirnfläche ein im wesentlichen kreisringförmiger Metallflansch 4 anliegt, der eine Anlagefläche 5 für einen nicht dargestellten radial verschiebbaren Laufring eines Wälzlagers bildet.

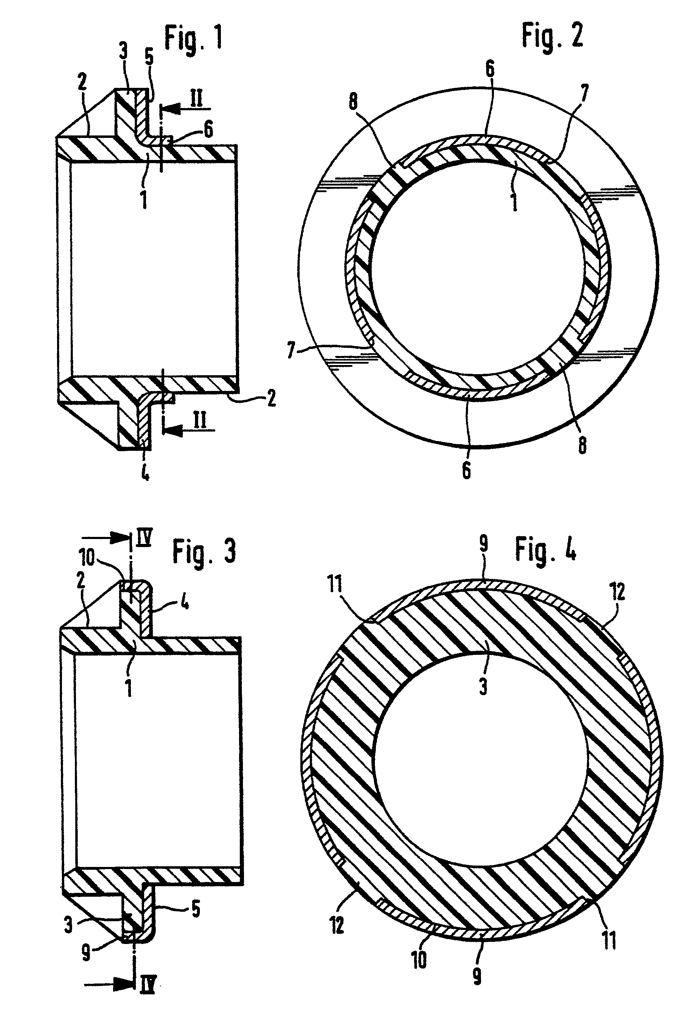

Gemäß den Figuren 1 und 2 ist der Metallflansch 4 an seiner inneren Umfangsfläche mit einem axial gerichteten Kragen 6 versehen, der sich mit radialer Vorspannung auf der Mantelfläche 2 des Nabenkörpers 1 abstützt. Wie Figur 2 zeigt, sind im Bereich des Kragens 6 radial durchgehende Ausnehmungen 7 vorhanden, die mit entsprechenden Vorsprüngen 8 des Nabenkörpers 1 zusammenwirken.

Beim Ausführungsbeispiel nach den Figuren 3 und 4 weist der Metallflansch 4 an seiner äußeren Umfangsfläche einen axial gerichteten Kragen 9 auf, der sich mit radialer Vorspannung auf der Mantelfläche 10 des Ringbundes 3 abstützt. Auch hier sind im Kragen 9 radial durchgehende Ausnehmungen 11 vorhanden, die mit entsprechenden Vorsprüngen 12 des Ringbundes 3 formschlüssig zusammenwirken.

Der Metallflansch 4 kann auch an seiner inneren und äußeren Umfangsfläche einen axial gerichteten Kragen 6, 9 aufweisen.

**Patentansprüche**

1. Schiebehülse aus polymeren Werkstoff für Kupplungsausrücklager, bestehend aus einem hohlzylindrischen Nabenkörper (1), der an seiner Mantelfläche (2) einen radial nach außen gerichteten Ringbund (3) aufweist, an dessen der Kupplung zugewandten Stirnfläche ein im wesentlichen kreisringförmiger Metallflansch (4) anliegt, der eine Anlagefläche (5) für einen radial verschiebbaren Laufring eines Wälzlagers bildet und einen axial gerichteten Kragen (6, 9) aufweist, **dadurch gekennzeichnet,** daß der Kragen (6, 9) sich wenigstens über einen Teil der inneren und/oder äußeren Umfangsfläche des Metallflansches (4) erstreckt und sich mit radialer Vorspannung auf einer Mantelfläche (2, 10) des Nabenkörpers (1) und/oder des Ringbundes (3) abstützt.

2. Schiebehülse nach Anspruch 1, **dadurch gekennzeichnet,** daß im Bereich des axial gerichteten Kragens (6, 9) wenigstens eine radial durchgehende Ausnehmung (7, 11) vorhanden ist, die mit einem entsprechenden Vorsprung (8, 12) des Nabenkörpers (1) oder des Ringbundes (3) formschlüssig zusammenwirkt.

## Claims

1. Sliding sleeve made of polymeric material for clutch release bearings comprising a hollow cylindrical hub element (1) with a radially outwards directed annular shoulder (3) on its outer peripheral face (2) and an essentially circular ring-shaped metal flange (4) bearing against the front face of the annular shoulder facing the clutch, which metal flange (4) forms the contact surface (5) for a radially displaceable bearing race of a rolling bearing and has an axially directed collar (6, 9), characterized in that the collar (6, 9) extends over at least a part of the inner and/or outer peripheral surface of the metal flange (4) and bears with radial pre-tension against an outer peripheral face (2, 10) of the hub element (1) and/or of the annular shoulder (3).

2. Sliding sleeve according to Claim 1, characterized in that there is at least one radially through-going recess (7, 11) in the region of the axially directed collar (6, 9), which recess interlocks with a corresponding projection (8, 12) of the hub element (1) or of the annular shoulder (3).

## Revendications

1. Manchon coulissant en matériau polymère pour des butées de débrayage, le manchon coulissant comportant un élément-moyeu (1) en cylindre creux qui comprend sur sa face périphérique extérieure (2) un épaulement annulaire (3) dirigé radialement vers l'extérieur, susr la face frontale duquel faisant face à l'embrayage, s'appuie une bride métallique (4) essentiellement en forme d'anneau circulaire qui forme une surface de contact (5) pour une bague de roulement à déplacement radial d'un palier à roulement et est pourvue d'un collet (6, 9) dirigé en direction axiale, caractérisé en ce que le collet (6, 9) s'étend au moins sur une partie de la surface périphérique intérieure et/ou extérieure de la bride métallique (4) et s'appuie avec une précontrainte radiale sur une face périphérique extérieure (2, 10) de l'élément-moyeu (1) et/ou de l'épaulement annulaire (3).

2. Manchon coulissant suivant la revendication 1, caractérisé en ce que dans la région du collet (6, 9) dirigé en direction axiale, il y a au moins un évidement (7, 11) s'étendant de bout en bout en direction radiale et coopérant avec une saillie correspondante (8, 12) de l'élément-moyeu (1) ou de l'épaulement annulaire (3) par concordance de forme.

Fig. 1

Fig. 2

Fig. 3

Fig. 4